# NEW EUROPEAN PATENT SPECIFICATION

(11) **EP 1 790 464 B2**
(45) Date of publication and mention of the opposition decision: **16.12.2015**
(45) Mention of the grant of the patent: 13.10.2010
(21) Application number: 06023659.3
(22) Date of filing: 14.11.2006
(51) Int. Cl.: B30B 5/02, B27D 1/08, B23Q 1/03, B29C 63/00

(54) **Press for the multisided cladding of parts with material in sheet form, particularly for cladding components of furniture or of doors or windows made of wood with a sheet of synthetic material**
Presse für die mehrseitige Beschichtung von Teilen mit Blattmaterial, insbesondere für die Beschichtung von Holzelementen in Möbeln, Türen und Fenstern mit einer Kunststofffolie
Presse pour le revêtement sur plusieurs cotés d'éléments avec un matériau en feuille, en particulier pour le revêtement des composants en bois de meubles, portes ou fenêtres avec une feuille en matériau synthétique

(30) Priority: 28.11.2005 IT MI20052274
(43) Date of publication of application: 30.05.2007
(73) Proprietor: ORMAMACCHINE S.p.A., 24020 Torre Boldone BG (IT)
(72) Inventor: Girardini, Gastone, 24040 Madone (Prov.of Bergamo) (IT); Azzimonti, Fabrizio, 24020 Gorle (Prov. of Bergamo) (IT)
(74) Representative: Modiano, Micaela Nadia

(56) References cited:
- EP-A- 1 160 074
- EP-A- 1 366 893
- WO-A-01/08876
- DE-A1- 19 611 754
- DE-U1- 29 707 883
- US-A- 6 103 012

## Description

The present invention relates to a press for the multisided cladding of parts with material in sheet form, particularly for cladding components of furniture or of doors or windows made of wood with a sheet of synthetic material.

As is known, presses for cladding parts by means of material in sheet form are constituted generally by a lower pressing surface and an upper pressing surface, which are arranged horizontally and face each other and between which the parts to be clad, covered with the material in sheet form that constitutes the cladding, are arranged. One of the two pressing surfaces can move vertically with respect to the other so as to open the press in order to allow the insertion of the parts to be clad and the extraction of the clad parts, or so as to close the press during the operation for applying the sheet of cladding. Presses of this kind are generally equipped with a part supporting tray, onto which the parts to be clad are deposited, such tray being moved in order to be placed between the pressing surfaces or outside of them.

In order to perform the multisided or three-dimensional cladding of parts with a material in sheet form, for example to clad a front or upper face and lateral faces which extend from such front or upper face of components of furniture or of doors or windows by means of these presses, the parts to be clad, arranged beforehand on the part supporting tray, must be raised with respect to the horizontal supporting surface formed by such tray, so as to allow the cladding sheet, which is made to adhere to the parts by means of suction applied between the sheet and the parts and/or by means of an elastically deformable membrane which is applied to the upper pressing surface, to also reach the lower edges of the lateral faces. The parts must be supported in regions of the lower face of the parts which are spaced from the perimetric profile of the parts. If the parts rested directly on the supporting surface formed by the part supporting tray, or if they were raised from said supporting surface by supporting elements which protrude from the perimetric profile, inevitable warping of the sheet where the parts rest on the supporting surface or on the supporting element would occur and the sheet would not adhere to the lower edge of the parts, achieving thus an unsatisfactory cladding.

For this reason, supporting shapes are generally positioned between the parts and the supporting surface formed by the part supporting tray and the parts are lifted by means of said shapes from the supporting surface. Such shapes must be sized as a function of the parts that they must support, so as to support the parts without protruding beyond their perimetric profile for the reasons explained above.

As the dimensions of the parts to be clad change, it becomes necessary to change the shapes used to support them on the part supporting tray. When the cladding is performed for different batches of parts having mutually different shapes, each composed of a small number of parts, the cost for providing the shapes and managing them is high in relation to the extent of the production and therefore affects significantly the production costs.

In order to solve this problem, part supporting trays have been proposed which have, instead of supporting shapes, pins which are inserted in appropriately provided holes arranged in a grid on the supporting surface formed by the part supporting tray. Such pins allow to provide supporting regions which are raised with respect to the supporting surface formed by the part supporting tray onto which the parts to be clad are arranged. Moreover, the grid-like arrangement of the holes for accommodating the pins allows to provide raised regions of different dimensions according to the dimensions of the parts to be clad.

Although such part supporting trays have solved the problem of producing and managing a large number of supporting shapes, they suffer the drawback of requiring a relatively long time for setting up the shapes, which must be performed by manually arranging the pins in the holes of the part supporting tray.

The problem of the time required by manual composition of the supporting shapes by means of pins has been solved by automating this composition. Part supporting trays have in fact been provided which are crossed by a plurality of holes which have a vertical axis and are arranged in a grid and in each of which a pin of variable length is inserted in an automated way. In practice, each pin is generally provided in two portions, which are mutually pivoted about a horizontal axis. A first one of these two portions is inserted coaxially, and therefore arranged vertically, in the corresponding hole which passes through the part supporting tray, while the second portion, by utilizing the rotation allowed by the pivoting to the first portion, can be arranged coaxially with respect to the first portion, achieving for the pin the condition of maximum length, or horizontally, achieving for the pin the condition of minimum length. The pins in the maximum-length condition protrude with their second portion below the part supporting tray, while the pins in the minimum-length condition do not protrude, or protrude to a lesser extent, from the lower side of the part supporting tray. Due to this fact, when the part supporting tray is deposited on the lower pressing surface of the press, the pins in the maximum-length condition, by resting on the lower pressing surface, raise the parts with respect to the supporting surface formed by the part supporting tray, while the pins in the minimum-length condition remain spaced downwardly from the parts.

Such presses are provided with actuators of different kinds, which act on the pins before the part supporting tray is inserted in the press so as to position the second portion of the pins in alignment with the first portion only for the pins that are completely covered by the parts to be clad. The covered or uncovered condition of the pins by the parts to be clad is detected beforehand, also in an automated manner, and this detection is used to control the intervention on the second portion of the pins.

In this manner, the time required to compose the shapes for supporting the parts by means of the pins of the supporting tray is reduced considerably.

In order to achieve satisfactory productivity, such presses require the use of a plurality of part supporting trays, generally three part supporting trays to be used to move the parts before, during and after the cladding operation.

The large number of pins, each composed of two mutually pivoted portions, supported by each part supporting tray, requires rather high production costs. Moreover, the presence of pins which are articulated on part supporting trays used to insert the parts in the press and to extract the parts from the press is a particularly vulnerable portion of the automated system, since the pins are exposed to impacts, with the consequence of breakage or damage, forcing frequent maintenance interventions in order to keep the entire system efficient.

WO 01/08876, disclosing the preamble of claim 1, EP-A-1 160 074, EP-A-1 366 893 and DE 196 11 754 disclose presses having actuation pin arranged at the part supporting tray of the press.

The aim of the present invention is to solve the problems described above by providing a press for the multisided cladding of parts with material in sheet form, particularly for cladding components of furniture or of doors or windows made of wood with a sheet of synthetic material, which allows to compose in an automated manner the shapes for supporting the parts to be clad with costs which are lower than those required by conventional presses.

Within this aim, an object of the invention is to provide a press with composition of the supporting shapes by means of pins which ensures high durability and reliability.

Another object of the invention is to provide a press whose operation can be correlated to the operation of the production units arranged upstream, so as to optimize the operation of the entire production line.

This aim and these and other objects, which will become better apparent hereinafter, are achieved by a press for the multisided cladding of parts with material in sheet form, as defined in claim 1.

Further characteristics and advantages of the invention will become better apparent from the description of a preferred but not exclusive embodiment of a press according to the invention, illustrated by way of non-limiting example in the accompanying drawings, wherein:

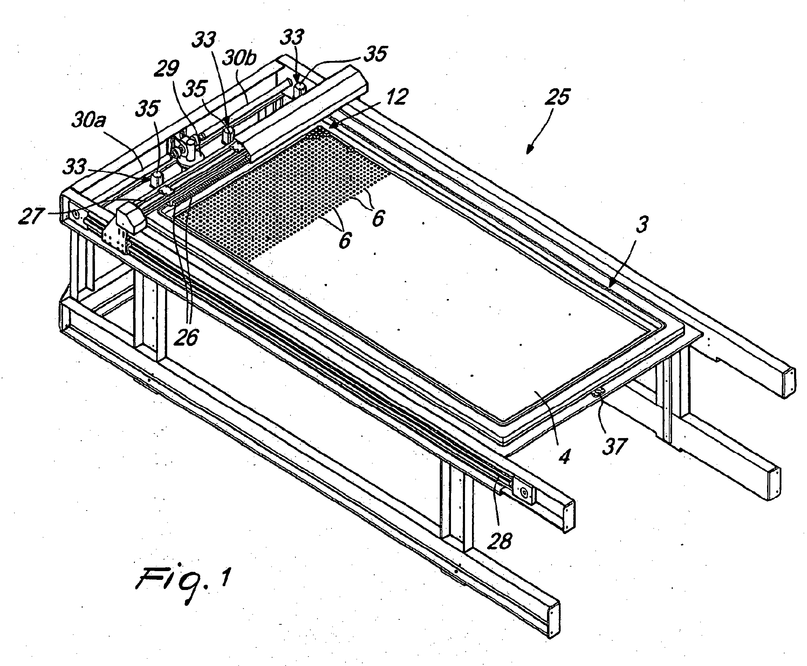

Figure 1 is a perspective view of a station for detecting the contour of the parts to be clad with a part supporting tray arranged in said detection station;

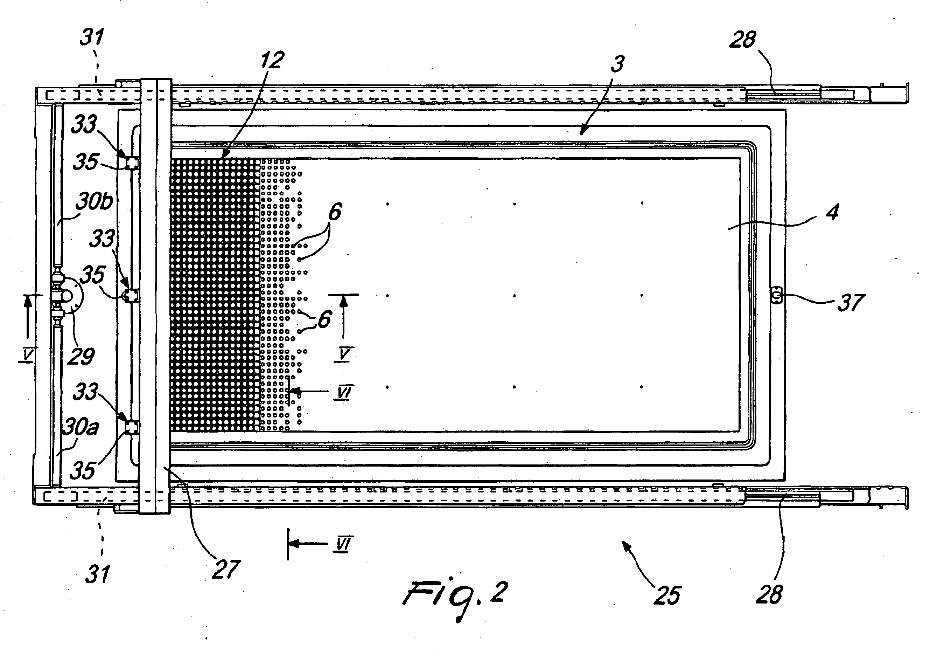

Figure 2 is a top plan view of the detection station;

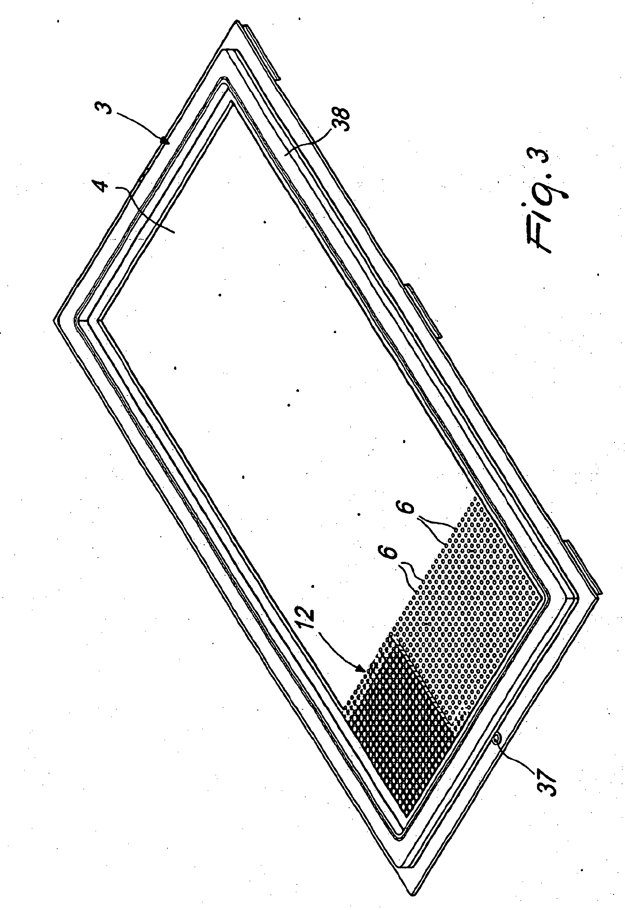

Figure 3 is a perspective view of the part supporting tray;

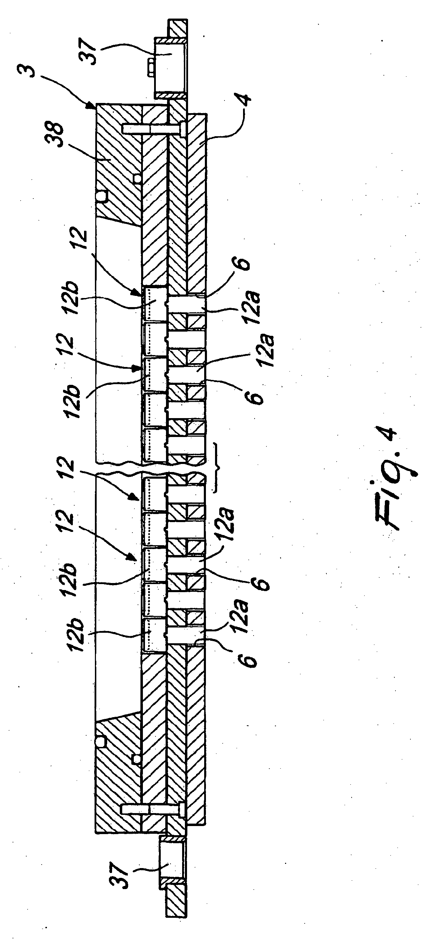

Figure 4 is an enlarged-scale longitudinal sectional view, taken on a vertical plane, of the part supporting tray;

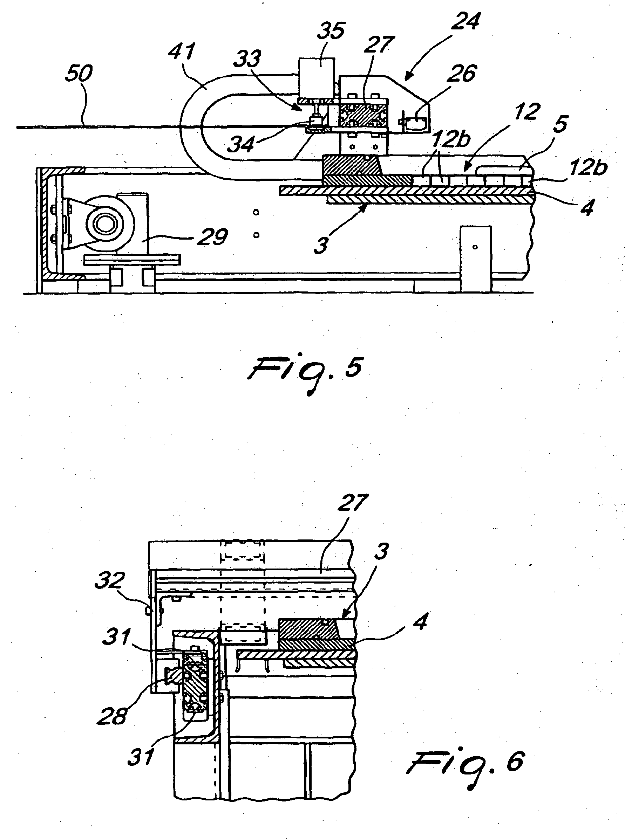

Figure 5 is an enlarged-scale sectional view of a detail of Figure 2, taken along the line V-V;
Figure 6 is an enlarged-scale sectional view of another detail of Figure 2, taken along the line VI-VI;

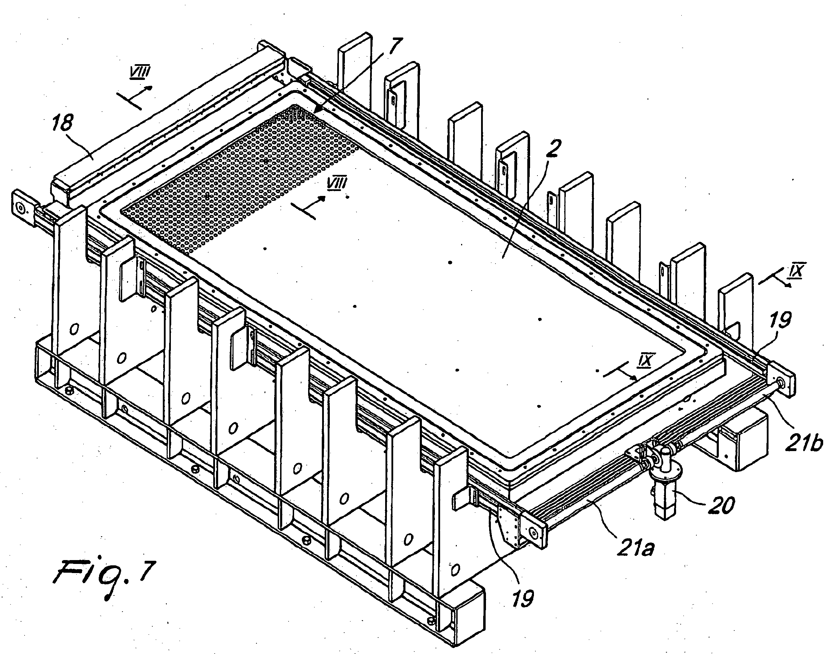

Figure 7 is a perspective view of the lower pressing surface;

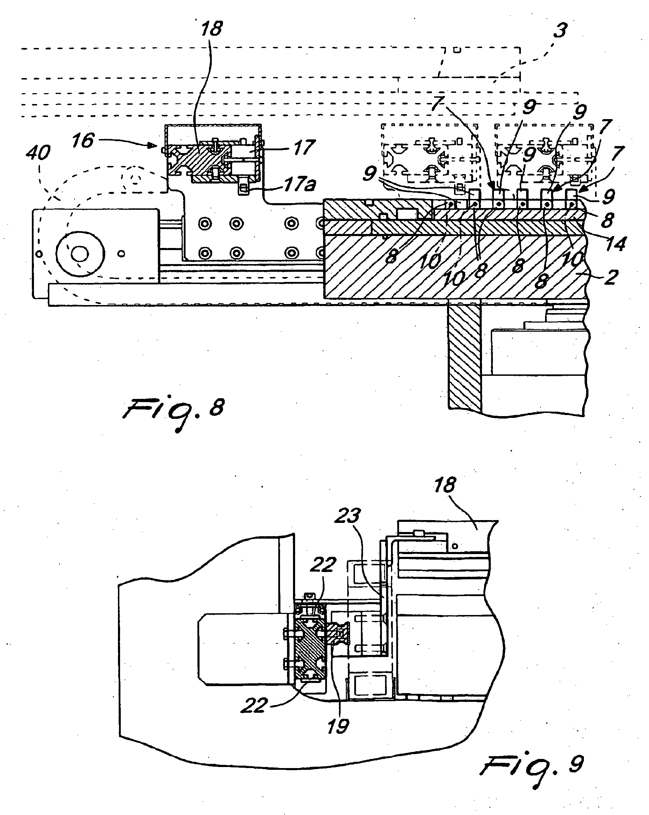

Figure 8 is an enlarged-scale sectional view of a detail of Figure 7, taken along the line VIII-VIII;
Figure 9 is an enlarged-scale sectional view of another detail of Figure 7, taken along the line IX-IX;

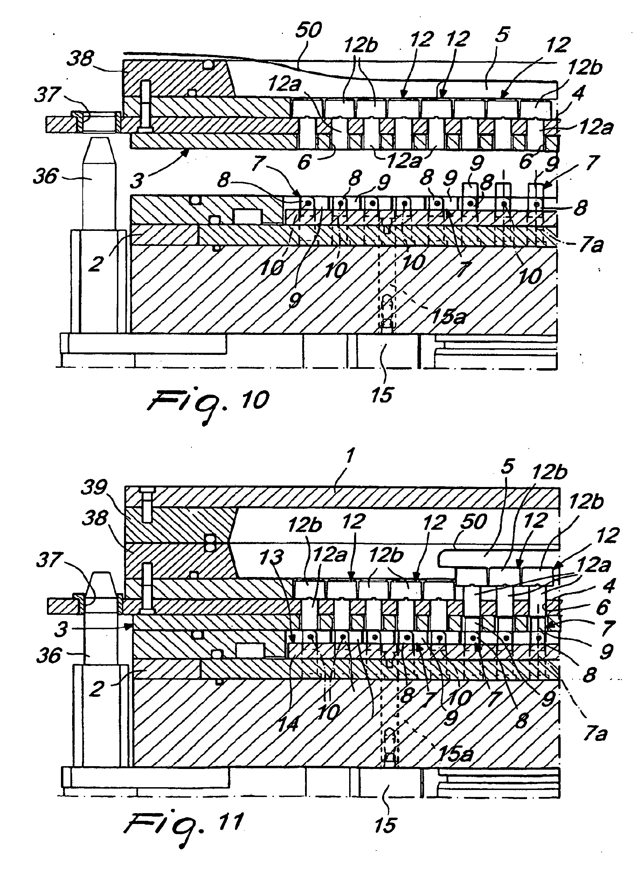

Figure 10 is a sectional view, taken along a longitudinal vertical plane, of the lower pressing surface and of the part supporting tray during its arrangement above the lower pressing surface;
Figure 11 is a sectional view, taken in a similar manner to Figure 10, of the part supporting tray inserted between the lower pressing surface and the upper pressing surface during the part cladding operation;

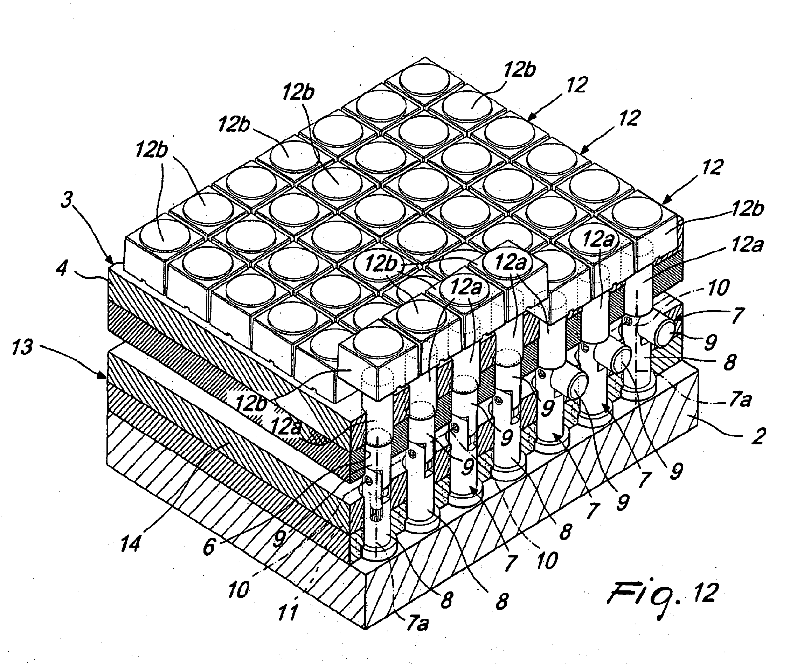

Figure 12 is a sectional perspective view of a portion of the part supporting tray arranged above the lower pressing surface, with the parts to be clad removed for the sake of greater clarity.

With reference to the figures, the press according to the invention comprises: an upper pressing surface 1 and a lower pressing surface 2, which are arranged substantially horizontally and face each other, and a part supporting tray 3, the bottom 4 of which forms a substantially horizontal supporting surface for the parts 5 to be clad.

The part supporting tray 3 can be rested on the lower pressing surface 2 so that the parts 5 to be clad face the upper pressing surface 1.

The part supporting tray 3 and the pressing surfaces 1 and 2 preferably have a rectangular plan shape.

Depending on production requirements, it is possible to provide a plurality of part supporting trays 3 which can be inserted one at a time between the pressing surfaces 1 and 2.

According to the invention, the bottom 4 of the part supporting tray 3 is crossed by a plurality of holes 6, which have a substantially vertical axis and are arranged in a grid, i.e., are uniformly mutually spaced along lines which are parallel to the perimetric sides of the part supporting tray 3, so as to occupy substantially the entire surface of the bottom 4 of the part supporting tray 3. The lower pressing surface 2 is provided with a plurality of actuation pins 7, which have a substantially vertical axis 7a and are arranged so as to correspond to the holes 6, so that by correctly positioning the part supporting tray 3 above the lower pressing surface 2, the holes 6 are each aligned with the hole axis aligned with the axis of a corresponding actuation pin 7. The actuation pins 7 are provided so as to have a vertical length which is variable as a function of the shape or contour of the parts 5 arranged on the part supporting tray 3 so as to be inserted, in their maximum-length condition, in the corresponding hole 6, providing supporting regions which are raised with respect to a supporting surface formed by the part supporting tray 3, as will become better apparent hereinafter, and make contact with the lower face of the parts 5 in regions which are spaced from the perimetric edge of the parts 5 or in order to not create (i.e. avoid creation of), in their minimum-length condition, said supporting regions which are raised with respect to said supporting surface.

Each actuation pin 7 is composed of a lower portion 8, which is fixed to the lower pressing surface 2 and whose vertical axis forms the axis 7a of the actuation pin 7, and of an upper portion 9, which is pivoted to the lower portion 8 about a horizontal pivoting axis 10. The upper portion 9 can rotate with respect to the lower portion 8 about the pivoting axis 10 in order to pass from an activation position, in which it provides the maximum-length condition for the actuation pin 7 by being aligned with the lower portion 8, to a deactivation position, in which it provides the minimum-length condition for the actuation pin 7 by being arranged substantially horizontally.

Elastic means constituted by a spring 11 are interposed between the lower portion 8 and the upper portion 9 and stabilize the activation position and the deactivation position of the upper portion 9.

The bottom 4 of the part supporting tray 3 is covered by a plurality of supporting pins 12, each of which is inserted in one of the holes 6 and can slide axially along the corresponding hole 6 with respect to the part supporting tray 3.

More particularly, each supporting pin 12 has a stem 12a, which is inserted coaxially in the corresponding hole 6 of the part supporting tray 3, and a head 12b, which preferably has a square plan shape, is connected to the stem 12a and is arranged above the bottom 4.

The heads 12b of the supporting pins 12, when rested on the bottom 4 of the part supporting tray 3, form as a whole said supporting surface, which is substantially horizontal and is the surface onto which the parts 5 to be clad are loaded.

In the figures, for the sake of simplicity in illustration and greater clarity, only some of the supporting pins 12 have been shown, and likewise only some of the actuation pins 7 have been shown.

The press comprises resetting means 13, which can be actuated on command in order to provide the transition of the upper portions 9 of the actuation pins 7 from the deactivation position to the activation position.

The resetting means 13 comprise a plate 14, which is arranged on the lower pressing surface 2 and is crossed by holes having a vertical axis, each of which accommodates one of the actuation pins 7. The plate 14 has such a thickness as to contain only part of the lower portion 8 of the actuation pins 7 and can move on command along a vertical direction with respect to the lower pressing surface 2 from an inactive position, in which it rests on the lower pressing surface 2 and is arranged below the axes 10 about which the upper portions 9 are pivoted to the lower portions 8 of the actuation pins 7 in order to allow the transition of the upper portions 9 of the actuation pins 7 from the activation position to the deactivation position, to a resetting position, in which it is shifted upwardly with respect to the inactive position so as to provide the transition of the upper portion 9 of the actuation pins 7 from the deactivation position to the activation position.

The vertical upward and downward movement of the plate 14 can be produced by fluid-operated actuators 15, for example pneumatic or hydraulic cylinders which have a vertical axis and are connected by means of their body below the lower pressing surface 2 and are connected to the plate 14 by means of the stem 15a of their piston, which passes through the lower pressing surface 2.

The transition of the upper portions 9 of the actuation pins 7 from the activation position to the deactivation position is achieved by way of actuation means 16, which comprise actuators 17 which are mounted on a supporting bar 18 which is oriented parallel to the shorter sides of the lower pressing surface 2. The supporting bar 18 is mounted so that it can slide on guides 19 which run parallel to the longer sides of the lower pressing surface 2.

The actuators 17 are spaced one another so as to correspond to the spacing of the actuation pins 7 along a row which is parallel to the shorter sides of the lower pressing surface 2, and each of the actuators 17 is provided with an element 17a which can move on command from an active position, in which it interacts with the upper portion 9 of the actuation pins 7 during the translational motion of the supporting bar 18 along the guides 19, to an inactive position, in which it does not interact with the upper portion 9 of the actuation pins 7 during the translational motion of the supporting bar 18 along the guides 19, or vice versa.

The actuators 17 can be constituted by conventional actuators, in particular electromagnetic actuators provided with an element 17a which can move vertically in order to interfere or not interfere with the upper portion 9 of the actuation pins 7 which are in the activation position.

The movement of the supporting bar 18 along the guides 19 is actuated by a gearmotor 20, which by means of two shafts 21 a, 21b is connected to pulleys whose axis is oriented horizontally and transversely to the guides 19, not shown in the figures, which in turn are each connected to a corresponding guiding pulley by means of a corresponding belt 22, the two portions of which are parallel to the guides 19. The supporting bar 18 is fixed, at its longitudinal ends, to a portion of the belts 22 by means of L-shaped elements 23 so that the actuation of the gearmotor 20 produces the movement of the supporting bar 18 along the guides 19 in one direction or the other according to the requirements.

The actuation means 16 are functionally connected to detection means 24 for detecting the shape or contour of the parts 5 to be clad, so that the transition of the upper portion 9 of the actuation pins 7 from the activation position to the deactivation position is performed as a function of the shape of the parts 5 to be clad.

More particularly, on the outside of the pressing surfaces 1 and 2 there is a detection station 25, in which the part supporting tray 3 is parked before it is inserted between the pressing surfaces 1 and 2. At the detection station 25 there are the detection means 24, which comprise preferably conventional optical detectors 26, which are mounted on a supporting bar 27 which is parallel to the shorter sides of the part supporting tray 3, arranged in the detection station 25, and can move on command along guides 28 which run parallel to the longer sides of the part supporting tray 3.

The movement of the supporting bar 27 along the guides 28 is performed in a manner which is similar to what has been described as regards the supporting bar 18 of the actuation means 16, i.e., by means of a gearmotor 29, which by means of two shafts 30a, 30b is connected to pulleys whose axis is oriented horizontally and transversely with respect to the guides 28, not shown in the figures, which in turn are each connected to a corresponding guiding pulley by means of a corresponding belt 31, the two portions of which are parallel to the guides 28. The supporting bar 27 is fixed, at its longitudinal ends, to a portion of the belts 31 by means of L-shaped elements 32, so that the actuation of the gearmotor 29 produces the movement of the supporting bar 27 along the guides 28 in one direction or the other according to the requirements.

Advantageously, the supporting bar 27, which supports the detection means 24, is provided with grip means 33 for the cladding sheet 50 in order to lay the cladding sheet 50 on the parts 5 deposited on the part supporting tray 3 during the translational motion of the supporting bar 27 along the guides 28, while the contour of the parts 5 to be clad is detected.

The grip means 33 can be constituted by clamps 34, which are mounted on the supporting bar 27 and are actuated for example by pneumatic actuators 35, which are also mounted on the supporting bar 27.

The press is completed by conventional means, not shown for the sake of simplicity, for moving the part supporting tray 3 in order to perform sequentially its placement in the detection station 25, its insertion between the pressing surfaces 1 and 2, and its extraction from the pressing surfaces, and by movement means, also of a known type and not shown for the sake of simplicity, for moving vertically one pressing surface with respect to the other.

Conveniently, in order to achieve high precision in the placement of the part supporting tray 3 above the lower pressing surface 2 there are centering means, constituted by pins 36 which have a vertical axis, are rigidly coupled to the lower pressing surface 2 and are designed to engage holes 37 provided in a border of the part supporting tray 3 at its shorter sides.

For the sake of completeness in description, it should be noted that the part supporting tray 3 is provided with a raised edge 38, which is designed to mate with a corresponding edge 39 of the upper pressing surface so as to lock between said edges the cladding sheet 50 when one pressing surface is moved toward the other.

Moreover, the press according to the invention can be provided with means, of a known type and not shown, for producing vacuum between the cladding sheet 50 and the underlying region of the part supporting tray 3 once said tray has been inserted between the pressing surfaces 1 and 2 and the cladding sheet 50 has been locked between the edges 38 and 39 in order to force the adhesion of the cladding sheet 50 to the upper face and to the lateral faces of the parts 5 to be clad.

Finally, the connecting ducts and cables required for the operation of the actuation means 16 located on the supporting bar 18 and of the detection means 24 located on the supporting bar 27 are accommodated in articulated protection ducts 40, 41 of a known type.

Operation of the press according to the invention is as follows.

The part supporting tray 3 is loaded with the parts 5 to be clad, which are deposited on the head 12b of the supporting pins 12, and is positioned in the detection station 25. The contour of the parts 5 to be clad is detected in the detection station 25 by making the supporting bar 27 slide along the guides 28 so that the detection means 24 can detect precisely the shape of the parts 5. During detection, by virtue of the grip means 33, the cladding sheet 50 is applied over the parts 5 to be clad.

The detection performed by the detection means 24 is transmitted, in a per se known manner, to an electronic control and actuation element, which supervises the operation of the press, actuates the translational motion of the supporting bar 18 along the guides 19 and actuates the actuators 17 so that they interact exclusively with the upper portion 9 of the actuation pins 7, which are designed to be aligned with the supporting pins 12 of the part supporting tray 3 which are covered, or covered only partially, by the parts 5 to be clad.

Once this operation has been completed, the part supporting tray 3 is arranged above the lower pressing surface 2. The movement of one pressing surface toward the other, performed for example by lifting the lower pressing surface 2 towards the upper pressing surface 1 or by lowering the part supporting tray 3 and the upper pressing surface 1, produces the insertion of the upper portion 9 of the actuation pins 7 that has remained in the activation position in the holes 6 of the bottom 4 of the part supporting tray 3, with consequent rise of the supporting pins 12 and of the parts 5 deposited thereon with respect to the supporting surface formed by the heads 12b of the supporting pins 12 which are not raised.

The lifting of the supporting pins 12 in practice produces supporting shapes which keep the parts 5 raised with respect to the supporting surface on which they were located prior to the approach of the pressing surfaces, i.e., with respect to the plane formed by the supporting pins 12 that have not been raised because they are aligned with the upper portions 9 of the actuation pins 7 which have been moved into the deactivation position by the intervention of the actuators 17. In this manner, the parts 5 to be clad are supported in regions which are spaced from their peripheral profile.

At this point, the cladding of the parts 5 is completed by making the cladding sheet 50 adhere to the upper face and to the lateral faces of the parts 5, for example by subjecting to suction the region between the bottom 4 of the part supporting tray 3 and the cladding sheet 50, which is heated, in a per se known manner, by the upper pressing surface 1.

Once the parts 5 have been clad, the pressing surfaces 1 and 2 are moved mutually apart and the part supporting tray 3 is moved outside the pressing surfaces 1 and 2 in order to allow the unloading of the clad parts 5. from the part supporting tray 3.

After the part supporting tray 3 has been moved away from the pressing surfaces 1 and 2, if it is necessary to clad parts 5 of a different type and/or arranged differently on the part supporting tray 3, the plate 14 is raised so as to return the upper portion 9 of the actuation pins 7, previously brought to the deactivation position, to the activation position.

In the meantime, another part supporting tray 3 with other parts 5 to be clad can be positioned in the detection station 25 and the cycle resumes as already described.

It should be noted that in the press according to the invention the part supporting tray 3 and the supporting pins 12, since the creation of the supporting shapes is almost entirely entrusted to the actuation pins 7 located on the lower pressing surface 2, can have an extremely simple structure and therefore be manufactured with distinctly lower costs than those required by part supporting trays of known types of presses with automated composition of the shapes for supporting the parts to be clad. Moreover, thanks to the fact that the actuation pins 7 are arranged on the lower pressing surface 2 and therefore are disengaged from the movement of the part supporting tray or trays 3, there is less danger of damage of the actuation pins 7 following accidental impacts.

In practice it has been found that the press according to the invention fully achieves the intended aim, since it provides an automated composition of the shapes for supporting the parts to be clad and can be equipped with a plurality of part supporting trays, so as to ensure high productivity, with distinctly lower costs than those required by known types of presses with automated composition of the supporting shapes.

Another advantage of the press according to the invention is that it can be connected functionally to machines arranged upstream, along the part production line, so as to optimize the arrangement and combination of the parts on the part supporting tray with their production in order to minimize the waste of the cladding sheet.

The press thus conceived is susceptible of numerous modifications and variations, all of which are within the scope of the appended claims; all the details may further be replaced with other technically equivalent elements.

In practice, the materials used, as well as the dimensions, may be any according to requirements and to the state of the art.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A press for the multisided cladding of parts with material in sheet form, particularly for cladding components of furniture or of doors or windows made of wood with a sheet of synthetic material, comprising an upper pressing surface (1) and a lower pressing surface (2) which face each other and a part supporting tray (3) provided with a bottom (4) which forms a substantially horizontal supporting surface for the parts (5) to be clad and can be rested on said lower pressing surface (2), **characterized in that** the bottom (4) of said part supporting tray (3) is crossed by a plurality of holes (6) which have a substantially vertical axis and are arranged in a grid, and **in that** said lower pressing surface (2) is provided with a plurality of actuation pins (7) which have a substantially vertical axis (7a) and are arranged so as to correspond to said holes (6) of the part supporting tray (3), said part supporting tray (3) being arrangeable so that the axes of its holes (6) are aligned with the axes (7a) of said actuation pins (7) and said actuation pins (7) having a vertical length which is variable as a function of the contour of the parts (5) that are arranged on said part supporting tray (3) in order to be inserted, in their maximum-length condition, through said holes (6), said actuation pins defining support regions for said parts (5) which are raised, with respect to a substantially horizontal supporting surface formed by said part supporting tray (3), said support regions making contact with the lower face of said parts (5) in regions which are spaced from the perimetric edge of the parts (5), or so as to avoid creation of said raised supporting regions in their minimum-length condition,
said actuation pins (7) have a lower portion (8), which has a vertical axis (7a) and is connected to said lower pressing surface (2), and an upper portion (9), which is pivoted to said lower portion (8) and can rotate about a pivoting axis (10) with respect to said lower portion (8) in order to pass from an activation position, in which said upper portion (9) is aligned with said lower portion (8), providing said condition of maximum length for the actuation pin (7), to a deactivation position, in which said upper portion (9) is arranged substantially horizontally, providing said condition of minimum length for the actuation pin (7),
wherein the press further comprises resetting means (13), which can be actuated on command in order to perform the transition of the upper portions (9) of said actuation pins (7) from said deactivation position to said activation position,
said resetting means (13) comprises a plate (14), which is arranged on said lower pressing surface (2) and is crossed by holes which have a vertical axis, each hole accommodating one of said actuation pins (7), said plate (14) having a thickness which is adapted to contain only part of said lower portion of the actuation pins (7), said plate (14) being movable on command along a vertical direction with respect to said lower pressing surface (2) from an inactive position, in which it rests on said lower pressing surface (2) and is arranged below the axes (10) about which the upper portions (9) are pivoted to the lower portions (8) of the actuation pins (7) in order to allow the transition of the upper portions (9) of the actuation pins (7) from the activation position to the deactivation position, to a resetting position, in which it is moved upwardly with respect to said inactive position in order to produce the transition of the upper portion (9) of the actuation pins (7) from said deactivation position to said activation position.

2. The press according to claim 1, **characterized in that** it comprises elastic means (11) which are interposed between said lower portion (8) and said upper portion (9) of the actuation pin (7) in order to stabilize the activation position and the position of said upper portion (9).

3. The press according to one or more of the preceding claims, **characterized in that** said lower pressing surface (2), said upper pressing surface (1) and said part supporting tray (3) have a substantially rectangular plan shape, said plurality of holes (6) being arranged along the lines of a grid which lies parallel to the sides of said part supporting tray (3).

4. The press according to one or more of the preceding claims, **characterized in that** said bottom (4) of the tray (3) is covered by a plurality of supporting pins (12), each inserted in one of said holes (6) and able to slide axially with respect to said part supporting tray (3).

5. The press according to claim 4, **characterized in that** said supporting pins (12) comprise a stem (12a), which is inserted in the corresponding hole (6) of the bottom (4) of the part supporting tray (3), and a head (12b), which is connected to said stem (12a) and has larger dimensions, said head (12b) being arranged above said bottom (4) of the part supporting tray (3) and forming said supporting surface in the condition for resting on said bottom (4) of the part supporting tray (3).

6. The press according to claim 5, **characterized in that** the head (12b) of said supporting pins (12) has a square plan shape.

7. The press according to one or more of the preceding claims, **characterized in that** it comprises actuation means (16) which act on command on the upper portion (9) of said actuation pins (7) in order to produce their transition from the activation position to the deactivation position.

8. The press according to one or more of the preceding claims, **characterized in that** it comprises means (24) for detecting the contour of the parts (5) to be clad.

9. The press according to claim 8, **characterized in that** said means (24) for detecting the contour of the parts (5) to be clad are functionally connected to said actuation means (16) for the intervention of said actuation means on the upper portion (9) of the actuation pins (7) according to the contour of the parts (5) to be clad.

10. The press according to one or more of the claims 8-9, **characterized in that** said means (24) for detecting the contour of the parts (5) to be clad are arranged at a detection station (25) which is arranged outside said lower pressing surface (2) and said upper pressing surface (1).

11. The press according to one or more of the claims 8-10, **characterized in that** said means (24) for detecting the contour of the parts (5) to be clad comprise optical detection means (26), which are mounted on a supporting bar (27) which is oriented parallel to the shorter sides of the part supporting tray (3) arranged in said detection station (25), said bar (27) for supporting the detection means (24) being movable on command along guides (28) which run parallel to the longer sides of said part supporting tray (3) arranged in said detection station (25).

12. The press according to claim 11, **characterized in that** said bar (27) for supporting the detection means (24) is provided with grip means (33).

13. The press according to one or more of the claims 7-12, **characterized in that** said actuation means (16) comprises actuators (17) which are mounted on a supporting bar (18) which is mounted so that it can slide on guides (19) which run parallel to the longer sides of said lower pressing surface (2), said bar (18) for supporting the actuation means (16) being oriented parallel to the shorter sides of the lower pressing surface (2) and said actuators (17) being mutually spaced so as to correspond to the spacing of the actuation pins (7) along a row which is parallel to the shorter sides of the lower pressing surface (2), each of said actuators (17) being provided with an element (17a) which can move on command from an active position, in which it interacts with the upper portion (9) of the actuation pins (7) during the translational motion of the bar (18) for supporting the actuation means (16) along said guides (19), to an inactive position; in which it does not interact with the upper portion (9) of the actuation pins (7) during the translational motion of the supporting bar (18) of the actuation means (16) along said guides (19), or vice versa.

14. The press according to one or more of the preceding claims, **characterized in that** it comprises means for moving said part supporting tray (3) in order to insert said tray (3) between said lower pressing surface (2) and said upper pressing surface (1) and means (36) for centering said part supporting tray (3) with respect to said lower pressing surface (2).

## Patentansprüche

1. Eine Presse für die mehrseitige Beschichtung von Teilen mit Material in Form von Folien, insbesondere für die Beschichtung von Holzelementen von Möbeln oder Türen oder Fenstern, mit einer Kunststofffolie, Folgendes umfassend: eine obere Pressoberfläche (1) und eine untere Pressoberfläche (2), die einander gegenüberliegen, und ein Teile tragendes Tablett (3), das mit einem Boden (4) versehen ist, welcher eine im Wesentlichen horizontale tragende Oberfläche für die zu beschichtenden Teile (5) bildet und welcher auf die untere Pressoberfläche (2) aufgelegt werden kann, **dadurch gekennzeichnet, dass** der Boden (4) des Teile tragenden Tabletts (3) von einer Vielzahl von Löchern (6) gekreuzt wird, die eine im Wesentlichen vertikale Achse haben und in einem Gitter angeordnet sind, und dadurch, dass die untere Pressoberfläche (2) mit einer Vielzahl von Betätigungsstiften (7) ausgestattet ist, die eine im Wesentlichen vertikale Achse (7a) haben und so angeordnet sind, dass sie den Löchern (6) des Teile tragenden Tabletts (3) entsprechen, wobei das Teile tragende Tablett (3) so angeordnet werden kann, dass die Achsen seiner Löcher (6) mit den Achsen (7a) der Betätigungsstifte (7) ausgerichtet sind, und die Betätigungsstifte (7) eine vertikale Länge haben, die variabel ist, als eine Funktion der Kontur der Teile (5), die auf dem Teile tragenden Tablett (3) angeordnet werden, um im Zustand ihrer maximalen Länge durch die Löcher (6) geführt zu werden, wobei die Betätigungsstifte Stützbereiche für die Teile (5) bestimmen, die mit Bezug auf eine im Wesentlichen horizontale tragende Oberfläche angehoben sind, welche von dem Teile tragenden Tablett (3) gebildet wird, wobei die Stützbereiche in Kontakt mit der unteren Fläche der Teile (5) in Bereichen stehen, welche von der perimetrischen Kante der Teile (5) beabstandet sind, oder so, dass die Erzeugung der angehobenen Stützbereiche im Zustand ihrer Mindestlänge verhindert wird;
wobei die Betätigungsstifte (7) einen unteren Abschnitt (8) haben, der eine vertikale Achse (7a) hat und mit der unteren Pressoberfläche (2) verbunden ist, und einen oberen Abschnitt (9) hat, der gelenkig mit dem unteren Abschnitt (8) verbunden ist und sich in Bezug zu dem unteren Abschnitt (8) um eine Drehachse (10) drehen kann, um von einer Aktivierungsposition, in welcher der obere Abschnitt (9) mit dem unteren Abschnitt (8) fluchtet, wodurch der Zustand der Maximallänge für den Betätigungsstift (7) hergestellt wird, in eine Deaktivierungsposition überzugehen, in welcher der obere Abschnitt (9) im Wesentlichen horizontal angeordnet ist, was den Zustand der Mindestlänge für den Betätigungsstift (7) herstellt;
wobei die Presse weiter Rückstellmittel (13) umfasst, welche auf Befehl betätigt werden können, um den Übergang der oberen Abschnitte (9) der Betätigungsstifte (7) aus der Deaktivierungsposition in die Aktivierungsposition durchzuführen;
wobei das Rückstellmittel (13) eine Platte (14) umfasst, die auf der unteren Pressoberfläche (2) angeordnet ist und von Löchern gekreuzt wird, welche eine vertikale Achse haben, wobei jedes Loch eines der Betätigungsstifte (7) aufnimmt und die Platte (14) eine Dicke hat, welche ausgebildet ist, um nur einen Teil des unteren Abschnitts der Betätigungsstifte (7) zu enthalten, wobei die Platte (14) auf Befehl entlang einer vertikalen Richtung zu der unteren Pressoberfläche (2) beweglich ist, und zwar aus einer inaktiven Position, in welcher sie auf der unteren Pressoberfläche (2) ruht und unterhalb der Achsen (10) angeordnet ist, um welche die oberen Abschnitte (9) gelenkig mit den unteren Abschnitten (8) der Betätigungsstifte (7) verbunden sind, um den Übergang der oberen Abschnitte (9) der Betätigungsstifte (7) aus der Aktivierungsposition in die Deaktivierungsposition zu ermöglichen, in eine Rückstellposition, in der sie in Bezug zu der inaktiven Position aufwärts bewegt wird, um den Übergang des oberen Abschnitts (9) der Betätigungsstifte (7) aus der Deaktivierungsposition in die Aktivierungsposition zu veranlassen.

2. Die Presse gemäß Anspruch 1, **dadurch gekennzeichnet, dass** sie elastische Mittel (11) umfasst, die zwischen dem unteren Abschnitt (8) und dem oberen Abschnitt (9) des Betätigungsstifts (7) angeordnet sind, um die Aktivierungsposition und die Position des oberen Abschnitts (9) zu stabilisieren.

3. Die Presse gemäß einem oder mehreren der obigen Ansprüche, **dadurch gekennzeichnet, dass** die untere Pressoberfläche (2), die obere Pressoberfläche (1) und das Teile tragende Tablett (3) eine im Wesentlichen rechteckige flache Form haben, wobei die Vielzahl von Löchern (6) entlang den Linien eines Gitters angeordnet sind, das parallel zu den Seiten des Teile tragenden Tabletts (3) liegt.

4. Die Presse gemäß einem oder mehreren der obigen Ansprüche, **dadurch gekennzeichnet, dass** der Boden (4) des Tabletts (3) von einer Vielzahl von Stützstiften (12) bedeckt ist, die jeweils in eines der Löcher (6) eingesetzt werden und axial zu dem Teile tragenden Tablett (3) gleiten können.

5. Die Presse gemäß Anspruch 4, **dadurch gekennzeichnet, dass** die Stützstifte (12) einen Schaft (12a) umfassen, der in das entsprechende Loch (6) des Bodens (4) des Teile tragenden Tabletts (3) eingesetzt wird, und einen Kopf (12b), der mit dem Schaft (12a) verbunden ist und größere Maße hat, wobei der Kopf (12b) über dem Boden (4) des Teile tragenden Tabletts (3) angeordnet ist und im Zustand zum Ruhen auf dem Boden (4) des Teile tragenden Tabletts (3) die tragende Oberfläche bildet.

6. Die Presse gemäß Anspruch 5, **dadurch gekennzeichnet, dass** der Kopf (12b) der Stützstifte (12) eine quadratische flache Form hat,

7. Die Presse gemäß einem oder mehreren der obigen Ansprüche, **dadurch gekennzeichnet, dass** sie Betätigungsmittel (16) umfasst, die auf Befehl auf den oberen Abschnitt (9) der Betätigungsstifte (7) einwirken, um ihren Übergang aus der Aktivierungsposition in die Deaktivierungsposition herbeizuführen.

8. Die Presse gemäß einem oder mehreren der obigen Ansprüche, **dadurch gekennzeichnet, dass** sie Mittel (24) zur Erkennung der Kontur der zu beschichtenden Teile (5) umfasst.

9. Die Presse gemäß Anspruch 8, **dadurch gekennzeichnet, dass** die Mittel (24) zur Erkennung der Kontur der zu beschichtenden Teile (5) funktionell mit den Betätigungsmitteln (16) verbunden sind, zwecks Intervention der Betätigungsmittel mit dem oberen Abschnitt (9) der Betätigungsstifte (7) entsprechend der Kontur der zu beschichtenden Teile (5).

10. Die Presse gemäß einem oder mehreren der Ansprüche 8-9, **dadurch gekennzeichnet, dass** die Mittel (24) zur Erkennung der Kontur der zu beschichtenden Teile (5) an einer Erkennungsstation (25) angeordnet sind, welche außerhalb der unteren Pressoberfläche (2) und der oberen Pressoberfläche (1) angeordnet ist.

11. Die Presse gemäß einem oder mehreren der Ansprüche 8-10, **dadurch gekennzeichnet, dass** die Mittel (24) zur Erkennung der Kontur der zu beschichtenden Teile (5) optische Erkennungsmittel (26) umfassen, welche auf einer Stützstange (27) montiert sind, die parallel zu den kürzeren Seiten des Teile tragenden Tabletts (3) ausgerichtet ist, das in der Erkennungsstation (25) angeordnet ist, wobei die Stange (27) zum Stützen der Erkennungsmittel (24) auf Befehl entlang Führungen (28) bewegt werden kann, die parallel zu den längeren Seiten des Teile tragenden Tabletts (3) verlaufen, das in der Erkennungsstation (25) angeordnet ist.

12. Die Presse gemäß Anspruch 11, **dadurch gekennzeichnet, dass** die Stange (27) zum Stützen der Erkennungsmittel (24) mit Greifmitteln (33) ausgestattet ist.

13. Die Presse gemäß einem oder mehreren der Ansprüche 7-12, **dadurch gekennzeichnet, dass** die Betätigungsmittel (16) Betätigungsglieder (17) umfassen, die auf einer Stützstange (18) montiert sind, welche so montiert ist, dass sie auf Führungen (19) gleiten kann, die parallel zu den längeren Seiten der unteren Pressoberfläche (2) verlaufen, wobei die Stange (18) zum Stützen der Betätigungsmittel (16) parallel zu den kürzeren Seiten der unteren Pressoberfläche (2) ausgerichtet ist und die Betätigungsglieder (17) voneinander beabstandet sind, so dass sie dem Abstand der Betätigungsstifte (7) entlang einer Reihe entsprechen, welche parallel zu den kürzeren Seiten der unteren Pressoberfläche (2) ist, wobei jedes der Betätigungsglieder (17) mit einem Element (17a) ausgestattet ist, das sich auf Befehl aus einer aktiven Position, in der es mit dem oberen Abschnitt (9) der Betätigungsstifte (7) während der translatorischen Bewegung der Stange (18) zusammenwirkt, um die Betätigungsmittel (16) entlang den Führungen (19) zu stützen, in eine inaktive Position bewegen kann, in der es während der translatorischen Bewegung der Stützstange (18) der Betätigungsmittel (16) entlang den Führungen (19) nicht mit dem oberen Abschnitt (9) der Betätigungsstifte (7) zusammenwirkt, oder umgekehrt.

14. Die Presse gemäß einem oder mehreren der obigen Ansprüche, **dadurch gekennzeichnet, dass** sie Mittel zum Bewegen des Teile tragenden Tabletts (3), um das Tablett (3) zwischen die untere Pressoberfläche (2) und die obere Pressoberfläche (1) einzufügen, und Mittel (36) umfasst, um das Teile tragende Tablett (3) in Bezug zu der unteren Pressoberfläche (2) zu zentrieren.

## Revendications

1. Presse pour le revêtement sur plusieurs côtés de pièces avec un matériau sous forme de feuille, en particulier pour recouvrir des composants de meubles ou de portes ou de fenêtres réalisés à partir de bois, avec une feuille de matériau synthétique, comprenant une surface de pression supérieure (1) et une surface de pression inférieure (2) qui se font face et un plateau de support de pièce (3) comportant un fond (4) qui forme une surface de support sensiblement horizontale pour les pièces (5) à recouvrir et peut reposer sur ladite surface de pression inférieure (2), **caractérisée en ce que** le fond (4) dudit plateau de support de pièce (3) est traversé par une pluralité de trous (6) qui ont un axe sensiblement vertical et sont agencés sur une grille, et **en ce que** ladite surface de pression inférieure (2) est dotée d'une pluralité de broches d'actionnement (7) qui ont un axe sensiblement vertical (7a) et sont agencées afin de correspondre auxdits trous (6) du plateau de support de pièce (3), ledit plateau de support de pièce (3) pouvant être agencé de sorte que les axes de ses trous (6) sont alignés avec les axes (7a) desdites broches d'actionnement (7) et lesdites broches d'actionnement (7) ayant une longueur verticale qui est variable en fonction du contour des pièces (5) qui sont agencées sur ledit plateau de support de pièce (3) afin d'être insérées, dans leur condition de longueur maximum, à travers lesdits trous (6), lesdites broches d'actionnement définissant des régions de support pour lesdites pièces (5) qui sont relevées, par rapport à une surface de support sensiblement horizontale formée par ledit plateau de support de pièce (3), lesdites régions de support établissant le contact avec la face inférieure desdites pièces (5) dans des régions qui sont espacées du bord périmétral des pièces (5), ou afin d'éviter la création desdites régions de support relevées, dans leur condition de longueur minimum,
lesdites broches d'actionnement (7) ont une partie inférieure (8), qui a un axe vertical (7a) et est raccordée à ladite surface de pression inférieure (2), et une partie supérieure (9) qui est pivotée par rapport à ladite partie inférieure (8) et peut tourner autour d'un axe de pivotement (10) par rapport à ladite partie inférieure (8) afin de passer d'une position d'activation dans laquelle ladite partie supérieure (9) est alignée avec ladite partie inférieure (8) fournissant ladite condition de longueur maximum pour la broche d'actionnement (7), à une position de désactivation, dans laquelle ladite partie supérieure (9) est agencée de manière sensiblement horizontale, fournissant ladite condition de longueur minimum pour la broche d'actionnement (7),
dans laquelle la presse comprend des moyens de réarmement (13), qui peuvent être actionnés sur commande afin de réaliser la transition des parties supérieures (9) desdites broches d'actionnement (7) de ladite position de désactivation à ladite position d'activation,
lesdits moyens de réarmement (13) comprennent une plaque (14) qui est agencée sur ladite surface de pression inférieure (2) et est traversée par des trous qui ont un axe vertical, chaque trou logeant l'une desdites broches d'actionnement (7), ladite plaque (14) ayant une épaisseur qui est adaptée pour contenir uniquement une partie de ladite partie inférieure des broches d'actionnement (7), ladite plaque (14) étant mobile sur commande le long d'une direction verticale par rapport à ladite surface de pression inférieure (2) à partir d'une position inactive dans laquelle elle repose sur ladite surface de pression inférieure (2) et est agencée au-dessous des axes (10) autour desquels les parties supérieures (9) sont pivotées par rapport aux parties inférieures (8) des broches d'actionnement (7) afin de permettre la transition des parties supérieures (9) des broches d'actionnement (7) de la position d'activation à la position de désactivation, jusqu'à une position de réarmement dans laquelle elle est déplacée vers le haut par rapport à ladite position inactive afin de produire la transition de la partie supérieure (9) des broches d'actionnement (7) de ladite position de désactivation à ladite position d'activation,

2. Presse selon la revendication 1, **caractérisée en ce qu'**elle comprend des moyens élastiques (11) qui sont intercalés entre ladite partie inférieure (8) et ladite partie supérieure (9) de la broche d'actionnement (7) afin de stabiliser la position d'activation et la position de ladite partie supérieure (9).

3. Presse selon une ou plusieurs des revendications précédentes, **caractérisée en ce que** ladite surface de pression inférieure (2), ladite surface de pression supérieure (1) et ledit plateau de support de pièce (3) ont une forme en plan sensiblement rectangulaire, ladite pluralité de trous (6) étant agencée le long des lignes d'une grille qui est parallèle aux côtés dudit plateau de support de pièce (3).

4. Presse selon une ou plusieurs des revendications précédentes, **caractérisée en ce que** ledit fond (4) du plateau (3) est recouvert par une pluralité de broches de support (12), chacune insérée dans l'un desdits trous (6) et pouvant coulisser de manière axiale par rapport audit plateau de support de pièce (3).

5. Presse selon la revendication 4, **caractérisée en ce que** lesdites broches de support (12) comprennent une tige (12a) qui est insérée dans le trou correspondant (6) du fond (4) du plateau de support de pièce (3), et une tête (12b) qui est raccordée à ladite tige (12a) et a de plus grandes dimensions, ladite tête (12b) étant agencée au-dessus dudit fond (4) du plateau de support de pièce (3) et formant ladite surface de support dans la condition dans laquelle elle repose sur ledit fond (4) du plateau de support de pièce (3).

6. Presse selon la revendication 5, **caractérisée en ce que** la tête (12b) desdites broches de support (12) a une forme de plan carrée.

7. Presse selon une ou plusieurs des revendications précédentes, **caractérisée en ce qu'**elle comprend des moyens d'actionnement (16) qui agissent sur commande sur la partie supérieure (9) desdites broches d'actionnement (7) afin de produire leur transition de la position d'activation à la position de désactivation.

8. Presse selon une ou plusieurs des revendications précédentes, **caractérisée en ce qu'**elle comprend des moyens (24) pour détecter le contour des pièces (5) à recouvrir.

9. Presse selon la revendication 8, **caractérisée en ce que** lesdits moyens (24) pour détecter le contour des pièces (5) à recouvrir, sont fonctionnellement raccordés auxdits moyens d'actionnement (16) pour l'intervention desdits moyens d'actionnement sur la partie supérieure (9) des broches d'actionnement (7) selon le contour des pièces (5) à recouvrir.

10. Presse selon une ou plusieurs des revendications 8-9, **caractérisée en ce que** lesdits moyens (24) pour détecter le contour des pièces (5) à recouvrir, sont agencés au niveau d'une station de détection (25) qui est agencée à l'extérieur de ladite surface de pression inférieure (2) et de ladite surface de pression supérieure (1).

11. Presse selon une ou plusieurs des revendications 8 à 10, **caractérisée en ce que** lesdits moyens (24) pour détecter le contour des pièces (5) à recouvrir, comprennent des moyens de détection optique (26) qui sont montés sur une barre de support (27) qui est orientée parallèlement aux côtés plus courts du plateau de support de pièce (3) agencé dans ladite station de détection (25), ladite barre (27) pour supporter les moyens de détection (24) étant mobile sur commande le long de guides (28) qui s'étendent parallèlement aux côtés plus longs dudit plateau de support de pièce (3) agencé dans ladite station de détection (25).

12. Presse selon la revendication 11, **caractérisée en ce que** ladite barre (27) pour supporter les moyens de détection (24) est dotée de moyens de préhension (33).

13. Presse selon une ou plusieurs des revendications 7 à 12, **caractérisée en ce que** lesdits moyens d'actionnement (16) comprennent des actionneurs (17) qui sont montés sur une barre de support (18) qui est montée de sorte qu'elle peut coulisser sur des guides (19) qui s'étendent parallèlement aux côtés plus longs de ladite surface de pression inférieure (2), ladite barre (18) pour supporter les moyens d'actionnement (16) étant orientée parallèlement aux côtés plus courts de la surface de pression inférieure (2) et lesdits actionneurs (17) étant mutuellement espacés afin de correspondre à l'espacement des broches d'actionnement (7) le long d'une rangée qui est parallèle aux côtés plus courts de la surface de pression inférieure (2), chacun desdits actionneurs (17) étant doté d'un élément (17a) qui peut se déplacer sur commande d'une position active dans laquelle il interagit avec la partie supérieure (9) des broches d'actionnement (7) pendant le mouvement de translation de la barre (18) pour supporter les moyens d'actionnement (16) le long desdits guides (19), à une position inactive dans laquelle il n'interagit pas avec la partie supérieure (9) des broches d'actionnement (7) pendant le mouvement de translation de la barre de support (18) des moyens d'actionnement (16) le long desdits guides (19) ou vice versa.

14. Presse selon une ou plusieurs des revendications précédentes, **caractérisée en ce qu'**elle comprend des moyens pour déplacer ledit plateau de support de pièce (3) afin d'insérer ledit plateau (3). entre ladite surface de pression inférieure (2) et ladite surface de pression supérieure (1) et des moyens (36) pour centrer ledit plateau de support de pièce (3) par rapport à ladite surface de pression inférieure (2).
